Europäisches Patentamt

European Patent Office

Office européen des brevets

(19)

(11) Numéro de publication: **0 309 318 B1**

(12) **FASCICULE DE BREVET EUROPEEN**

(45) Date de publication de fascicule du brevet: **23.12.92**  (51) Int. Cl.5: **G07F 7/08**, G06F 15/26, G07F 7/00, G07B 15/04

(21) Numéro de dépôt: **88402316.9**

(22) Date de dépôt: **14.09.88**

(54) **Système de réservation d'une prestation.**

(30) Priorité: **21.09.87 FR 8713017**

(43) Date de publication de la demande:
**29.03.89 Bulletin 89/13**

(45) Mention de la délivrance du brevet:
**23.12.92 Bulletin 92/52**

(84) Etats contractants désignés:
**DE ES GB IT NL**

(56) Documents cités:
**FR-A- 2 503 423**
**GB-A- 2 178 211**
**US-A- 4 247 759**
**US-A- 4 298 793**

**PATENT ABSTRACTS OF JAPAN, vol. 10, no.
247 (P-490)[2303], 26 août 1986, page 65 P
490; & JP-A-61 75 473**

**Idem**

**PATENT ABSTRACTS OF JAPAN, vol. 11, no.
337 (P-633)[2784], 5 novembre 1987, page 76
P 633; & JP-A-62 120 573**

**Idem**

**PATENT ABSTRACTS OF JAPAN, vol. 10, no.
206 (P-478)[2262], 18 juillet 1986, page 61 P
478; & JP-A-61 46 560**

(73) Titulaire: **SGS-THOMSON MICROELECTRO-
NICS S.A.**
**7, Avenue Galliéni**
**F-94250 Gentilly(FR)**

(72) Inventeur: **Brisson, Pierre**
**CABINET BALLOT-SCHMIT 84, Avenue Kléber**
**F-75116 Paris(FR)**

(74) Mandataire: **Schmit, Christian Norbert Marie
et al**
**Cabinet Ballot-Schmit 7, rue Le Sueur**
**F-75116 Paris(FR)**

# Description

La présente invention a pour objet un système de réservation et de fourniture d'une prestation à se faire servir. Ce système de réservation est de préférence un système de réservation donnant accès à des prestations de nature commerciale telles que location de voitures ou éventuellement location de places de train. Le système est plus particulièrement destiné à équiper des prestataires de service qui mettent à la disposition de leur clients des services dont ils ne maîtrisent pas toujours toutes les caractéristiques de disponibilité. Le système de l'invention, comporte l'utilisation et l'exploitation de cartes à mémoire distribuées par ce prestataire à ses clients. Ces cartes à mémoire peuvent être des cartes à enregistrement magnétique. Elles sont de préférence des cartes à mémoire munies de circuits intégrés électroniques, dites cartes à puce, pour garantir la sécurité des transactions qu'elles permettent.

Bien que la location de voitures ne puisse être considérée comme le seul domaine d'application de l'invention, ce domaine sera pris en exemple pour montrer les inconvénients de fonctionnement que de tels systèmes comportent, et les solutions apportées à cet égard par l'invention. On connaît la location de voitures et la lenteur des formalités administratives qui constituent l'environnement néccessaire de ce service. En effet, il est indispensable d'identifier le futur conducteur du véhicule loué, notamment de relever son numéro de permis de conduire, d'une part pour établir une relation de responsabilité entre le loueur et ce conducteur et d'autre part, facultativement, pour lui proposer des services personnalisés tels qu'une assurance ou des réductions particulières. Pour hâter le déroulement de ces formalités, et aussi un peu pour fidéliser leurs clients, certains loueurs ont pris l'habitude de délivrer à des clients qui en font la demande des cartes préenregistrées, soit magnétiquement soit mécaniquement, et comportant toutes les indications néccessaires à l'identification de ce client. Sur leur lieu d'arrivée, généralement un aéroport ou une gare, les clients s'adressent au guichet du loueur auquel ils se sont affiliés. Là ils établissent leur bon de location avec le préposé du loueur en lui remettant leur carte. Dans bien des cas d'ailleurs les clients porteurs de cartes passent d'une manière prioritaire devant les clients qui en sont démunis. A l'issue de ces formalités, le préposé remet au client les cléfs du véhicule qu'il vient de louer et qui lui est attribué, lui indique quel est ce véhicule et à quel endroit sur une place de stationnement ce véhicule se trouve.

Les problèmes liés à la réservation des véhicules sont multiples. Essentiellement, et par opposition à ce qui se pratique dans les transports ferroviaires par exemple, la disponibilité de la prestation, des véhicules, n'est jamais certaine. En effet, les locataires précédents peuvent avoir décidé de prolonger la durée de la location à laquelle ils s'étaient engagés. En outre, il est fréquent qu'un client prenne en compte un véhicule en un lieu et le rende au loueur en un autre lieu. En augmentant le nombre de véhicules du parc de véhicules du loueur, on peut statistiquement résoudre ces problèmes de disponibilité. Cependant, si on peut alors admettre que la demande peut être globalement satisfaite, on ne réalise pas sans intervention humaine la mise à disposition des clients des véhicules effectivement restitués à temps, et qui sont disponibles sur une place de stationnement.

Ainsi, la réservation à l'avance d'un véhicule en un lieu et à une date donnés, ne correspond pas véritablement à une réservation. En effet elle n'empêche pas le client de devoir emprunter une file d'attente comportant tous les individus qui ont également réservé et qui viennent au guichet du loueur pour se faire donner les indications relatives à la location des véhicules qui leur sont attribués. La présence indispensable des personnels chargés de la mise à disposition des véhicules augmente le coût des locations. Par ailleurs le caractère souvent tardif voire nocturne des horaires auxquels les véhicules en question sont pris en compte est astreignant. Et le coût supplémentaire lié à un travail effectué en dehors des heures normales augmente aussi le coût de la location. La solution qui consisterait à faire travailler les préposés dans la journée, pour l'entretien des véhicules restitués par exemple, n'est pas envisageable avec un tel système.

GB-A-2 178211 divulgue un système de réservation et de fourniture d'une prestation conforme aux préambules des revendications 1 et 2. Ce système connu est en particulier relatif à la réservation d'un emplacement pour une voiture de louage et prévoit de réserver un emplacement spécifique déjà au moment où le client effectue la réservation. Ce système manque donc de flexibilité.

L'invention a pour objet de remédier à cet inconvénient en proposant des systèmes tels que definis par les revendications 1 et 2, pour la réservation, pour l'identification du client, et surtout pour l'accès à la prestation réservée. Le système de l'invention utilise une carte à mémoire permettant des liaisons interactives avec le dispositif de réservation et avec des moyens d'accès à cette prestation. Ainsi, une fois que la réservation a été faite, le dispositif de réservation ou la carte, ou bien même les deux, contiennent les informations relatives à la réservation. Plus tard, au moment de se faire servir la prestation, au moment d'aller prendre le véhicule loué, le client introduit sa carte dans un terminal proche de l'endroit où il veut se faire servir cette prestation. Ce terminal peut lui indiquer où et comment trouver le véhicule qu'on lui a attribué. L'indication de la place de stationnement du véhicule peut être affichée sur un panneau indicateur relié au terminal. Quand la carte est introduite dans le terminal ce dernier associe une clef d'accès electronique à la carte, de telle manière qu'à proximité du véhicule désigné le client introduise sa carte dans des moyens pour fournir la prestation, par example une borne d'accès dite borne de libération du véhicule ou plus généralement de libération de la prestation qui lui permet matériellement d'avoir accès à la prestation, De préférence la carte jouera le rôle de clef d'ouverture des portes du véhicule, et de clef de contact pour la mise en marche de ce véhicule.

A l'issue de la location le client place le véhicule utilisé sur un emplacement de stationnement appartenant à la société de location, et condamne l'accès à ce véhicule en introduisant sa carte dans la borne de libération associée à cet emplacement de stationnement. Une barrière commandée par la borne de libération. s'abaisse alors, tandis que la borne peut délivrer un reçu relatif aux caractéristiques de la prestation servie, notamment de sa durée. Cette borne peut aussi servir à introduire ces caractéristiques dans une zone adéquate de la carte à mémoire.

L'invention sera mieux comprise à la lecture de la description qui suit et à l'examen de la figure qui l'accompagne. Celles-ci ne sont données qu'à titre indicatif et non limitatif de l'invention.

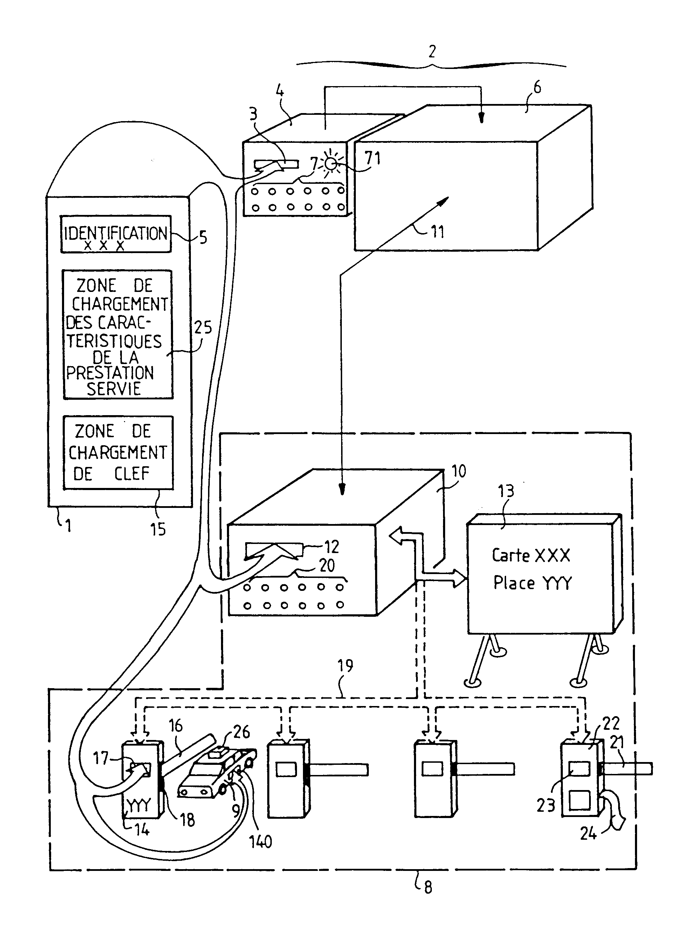

La Figure 1 unique montre schématiquement un système de réservation et de fourniture d'une prestation conforme à l'invention. Ce système comporte au moins une carte à mémoire 1 affectée à un client et un dispositif 2 de réservation pour recevoir dans un lecteur 3 de cartes d'un terminal 4 de ce dispositif la carte 1 lors d'une opération de réservation. La carte à mémoire 1 est une carte dite à puce : elle est munie de circuits intégrés électroniques de mémorisation et d'interaction. Au moment de la réservation, l'identification du client contenue dans une zone mémoire 5 de la carte 1 est immédiatement transmise à une unité centrale 6 du dispositif 2 de réservation. Pour effectuer la réservation le futur locataire programme, par exemple au moyen d'un clavier 7 du terminal 4, les caractéristiques de sa location. Par exemple il indique la date et l'heure à laquelle il désire disposer du véhicule, le lieu où il prendra celui-ci, le type de véhicule qu'il souhaite qu'on lui mette à disposition, ainsi que le cas échéant la nature du déplacement et les conditions d'assurance auxquelles il accepte d'être soumis. Dans certaines circonstances plusieurs de ces indications peuvent être préenregistrées dans la carte et automatiquement envoyées à l'unité centrale 6. Si la réservation peut être acceptée, par exemple par comparaison du lot des réservations semblables déjà effectuées à un indice (statistique ou non) de disponibilité des véhicules loués, un jeu de voyants 71 le signale au client. Le client valide alors sa réservation avec le clavier 7.

Le système de l'invention est principalement caractérisé par l'existence, sur le lieu de délivrance de la prestation, de moyens 8 d'accès à la prestation réservée, par exemple ici à un véhicule 9. Les moyens d'accès comportent dans l'exemple représenté un terminal 10 relié fonctionnellement par une transmission 11 au dispositif 2 de réservation. La transmission 11 peut être hertzienne ou de type téléphonique. Elle peut être effectuée immédiatement après la réservation ou au contraire être en liaison directe et sollicitable à la demande. Dans le premier cas le terminal 10 comporte des moyens mémoires. Le terminal 10 comporte en tous cas un lecteur 12 de cartes à mémoire. Lorsque le locataire arrive dans le lieu où il désire louer le véhicule, il introduit sa carte 1 dans le lecteur 12. Le terminal 10 reconnaît alors la nature de la réservation et indique à ce locataire, au moyen d'un panneau indicateur 13 voisin que le véhicule 9 qui lui a été attribué se trouve à une place donnée dans le parc de stationnement. Au besoin, le panneau indicateur 13 peut en plus comporter des indications pour montrer au locataire le chemin à suivre pour se rendre à cet emplacement.

Mais le terminal 10 est en fait plus puissant, Il crée en plus à cet instant un protocole commun à la carte 1 et à une borne de libération 14 du véhicule 9. Cette borne de libération 14 permet matériellement de retenir le véhicule 9 ; elle se trouve à l'emplacement indiqué par le panneau 13. Cette borne d'accès peut être plus simplement matérialisée par une serrure électronique 140 d'ouverture des portes du véhicule 9 et/ou par un dispositif, non représenté, de démarrage du véhicule au moyen de la carte 1. Dans un exemple ce protocole est constitué par une clef logique. Par exemple il comporte l'enregistrement d'un code numérique dans une zone mémoire 15 de la carte avant de rendre celle-ci au locataire. Après avoir saisi sa carte qui lui est rendue par le terminal 10, ce locataire se rend près du véhicule 9 dont l'accès peut être contrôlé par une barrière 16 commandée par la borne 14 et/ou par des portes de ce véhicule commandées par la serrure 140. La borne 14 et/ou la serrure 140 comportent elles aussi un lecteur 17 de cartes à mémoire. Le locataire introduit sa carte dans le lecteur 17. Des moyens logiques contenus dans la borne 14 et/ou la serrure 140 reconaissent alors le protocole créé par le terminal 12 et provoquent le basculement de la barrière 16 ou le cas échéant l'ouverture des portes. Le basculement de la barrière 16 peut en outre être couplé électriquement ou mécaniquement avec l'ouverture d'un coffre 18 qui contient les clefs du véhicule 9. Après avoir permis l'ouverture des portes, la carte 1 peut aussi permettre, en servant de cléf de contact, la mise en marche du véhicule. Dans ces conditions l'accès à la prestation a été réalisé entièrement automatiquement.

La justification de la création du protocole au dernier moment est liée au phénomène de la location proprement dit. En créant par des moyens qu'on étudiera plus loin et comprenant une liaison directe entre les bornes 14 et l'unité centrale 6, un protocole de libération dès la réservation, on aurait pu se passer de la création de ce protocole dans le terminal 10. Cependant ceci reviendrait à ne pas tenir compte des défections de réservation, des changements de décision des précédents locataires, ou même dans le cas où tout le monde ne pourraît pas être servi, de l'ordre prioritaire des arrivées sur les véhicules, et surtout du garnissage réel en véhicules des emplacements commandés par les bornes. Dans ces conditions il est plus judicieux d'effectuer l'attribution du véhicule au dernier moment : c'est à dire lorsque le locataire s apprête effectivement à prendre en compte le véhicule.

Avec l'invention, on concilie la nécéssité d'indiquer au locataire les renseignements utiles à la location et de lui donner au dernier moment une cléf d'accès à cette location, avec le fait que ces indications et que cet accès ne sont pas connus au moment de la réservation. Si le terminal 10 ne possède pas de moyens programmés pour définir le protocole, il se met en relation, à cet instant, avec l'unité centrale 2 qui, elle, définit le protocole.

Le fait que le protocole soit matérialisé sous la forme du chargement d'une clef logique dans la carte à mémoire 1 évite d'avoir à relier chaque borne 14 au terminal 12. Dans ces conditions les bornes et le terminal peuvent être indépendants. Il suffit seulement au terminal 10 d'attribuer, comme clef logique, la clef connue du terminal 10 qui correspond à la borne 14 à laquelle on indique que le locataire doit se rendre. En variante les cartes à mémoire à puce peuvent ne pas être munies de zone 15 de chargement de clef. Dans ce cas on ne charge pas de clef logique dans ces zones, mais on envoie par une liaison 19, matérialisée par des tirets, à la borne concernée des caractéristiques relatives à l'identification du locataire qui va arriver près de la borne. Lorsque le locataire arrive près de cette borne et y introduit sa carte, la borne reconnaît l'identité de ce locataire (plutôt que de reconaître sa propre clef logique). La barrière 16 s'ouvre dans les mêmes conditions.

D'une manière préférée le terminal 10 comporte également un clavier 20 de programmation permettant à des éventuels locataires, munis de cartes, mais qui n'auraient pas réservé, d'effectuer, sur le lieu même de la location, en même temps la réservation et la location d'un véhicule. Dans la mesure où le parc des véhicules gérés par ce terminal 10 ne comporterait plus de véhicules non réservés et disponibles, ce terminal 10 pourraît provoquer à cette sollicitation l'affichage sur le panneau 13 de renseignements permettant au locataire de trouver une autre solution.

Lorsque le locataire a fini de se servir du véhicule il le reconduit à une place de stationnement appartenant au loueur. Il gare ce véhicule dans une place disponible, dont la barrière 21 de la borne 22 est initialement relevée. Il lui suffit alors d'introduire sa carte dans le lecteur 23 de la borne 22 pour provoquer la fermeture de la barrière 21 et pour obtenir un reçu 24 édité par la borne 23. Le reçu indique par exemple les caractéristiques de la prestation qui lui a été servie : notamment sa durée. L'édition du reçu peut être remplacée ou accompagnée du chargement des caractéristiques de la prestation servie dans une zone mémoire 25 de la carte 1. Il replace évidemment les clefs du véhicule dans le coffre de la barrière 21 avant l'introduction de sa carte. La borne peut d'ailleurs contenir une fonction logique empêchant la fermeture de la barrière 21 tant que les clefs du véhicule n'ont pas été remises dans son coffre. Quand la carte 1 sert elle-même de clef de contact l'accès au véhicule est condamné plus simplement.

Si les bornes 14 ou 22 ne sont pas reliées au terminal 10, il peut être ultérieurement demandé au locataire d'aller réinsérer sa carte une deuxième fois dans le terminal 10 pour que ce terminal puisse transmettre à un service de gestion des locations les caractéristiques de la location servie. Celles-ci sont contenues dans la zone mémoire 25 de la carte 1. Eventuellement il peut lui être demandé de programmer au moyen du clavier 20 le nombre de kilomètres qu'il a parcourus ainsi que la manifestation d'avaries dont il aurait eu à subir l'apparition. En variante préférée un ordinateur de bord 26 du véhicule, qui a reçu la carte 1, peut introduire dans la zone 25 toutes ces indications pour permettre cette transmission automatique. Si par contre les bornes 14 et 22 sont reliées par un bus 19, la transmission des caractéristiques de la location peut être automatique depuis l'endroit où est rendu le véhicule. Le cas échéant, les bornes 22 peuvent être munies de claviers pour permettre la programmation des kilomètres parcourus si les véhicules ne sont pas munis d'ordinateur de bord. Dans les deux cas, que les bornes soient reliées ou non au terminal 10, on assure ainsi que le terminal 10 est en possession de toutes les données nécéssaires à la gestion de son parc de véhicules effectivement disponibles.

**Revendications**

1.  Système de réservation et de fourniture d'une prestation comprenant :
    - des cartes (1), dans lesquelles peuvent être écrites des informations, affectées à des clients de cette prestation,
    - un dispositif (2) de réservation ayant un lecteur (3) de cartes destiné à recevoir la carte d'un client durant une opération de réservation, et des moyens (7) pour communiquer avec ce client, ce dispositif (2) de réservation enregistrant des informations relatives à la réservation d'une prestation faite par le client auquel est affectée la carte,
    - des terminaux (10) connectés au dit dispositif (2) de réservation, ces terminaux (10) étant adaptés à recevoir les cartes de clients,
    - des moyens (14;140) associés avec lesdits terminaux (10) pour délivrer physiquement à un client une prestation réservée en réponse aux informations enregistrées relatives à la réservation faite par le client,
    - caractérisé en ce que des moyens (12) sont prévus dans les dits terminaux (10) pour écrire dans la carte une clé d'accès pour une prestation spécifique parmi les prestations disponibles auprès de ces terminaux (10),
    - les dits moyens (14;140) pour délivrer physiquement la prestation réservée comprennent un appareil (17) de lecture de cartes, déconnecté de ces terminaux (10), et situé à un endroit où ladite prestation spécifique est disponible, et des moyens (16;18;140) pour fournir ladite prestation spécifique en réponse à la lecture de ladite clé d'accès par ledit appareil (17) de lecture de cartes déconnecté.

2.  Système de réservation et de fourniture d'une prestation comprenant :
    - des cartes (1), dans lesquelles peuvent être écrites des informations, affectées à des clients de cette prestation,
    - un dispositif (2) de réservation ayant un lecteur (3) de cartes destiné à recevoir la carte d'un client durant une opération de réservation, et des moyens (7) pour communiquer avec ce client, ce dispositif (2) de réservation enregistrant des informations relatives à la réservation d'une prestation faite par le client auquel est affectée la carte,
    - des terminaux (10) connectés au dit dispositif (2) de réservation (2), ces terminaux (10) étant adaptés à recevoir les cartes de clients,
    - des moyens (14;140) associés avec lesdits terminaux (10) pour délivrer physiquement à un client une prestation réservée en réponse aux informations enregistrées relatives à la réservation faite par le client,
    - caractérisé en ce que des moyens sont prévus dans les dits terminaux (10) pour attribuer à un client une prestation specifique parmi les prestations disponibles auprès de ces terminaux et pour transmettre (19) à un appareil (17) de lecture de cartes, connecté aux dits terminaux (10) et situé à un endroit où ladite prestation spécifique est disponible, une clé d'accès pour une prestation spécifique disponible auprès de cet appareil (17), cette clé d'accès correspondant à ladite carte,
    - lesdits moyens (14,140) pour délivrer physiquement la prestation spécifique comprennent ledit appareil (17) de lecture de cartes connecté aux dits terminaux (10) et des moyens (16,18,140) pour fournir ladite prestation spécifique, en réponse à la lecture par ledit appareil (17) de lecture de carte de ladite carte correspondant à la clé d'accès transmise.

3.  Système selon la revendication 1 ou la revendication 2, caractérisé en ce que des moyens (13) sont prévus auprès des dits terminaux (10) pour indiquer au client une information relative à la prestation spécifique à délivrer, pendant que la clé d'accès pour cette prestation spécifique est écrite dans la carte ou transmise audit appareil.

4.  Système selon la revendication 3 caractérisé en ce que lesdits moyens (13) pour indiquer une information comprennent des moyens pour indiquer l'endroit où ladite prestation spécifique est disponible.

5.  Système selon une quelconque des revendications 1 à 4, caractérisé en ce que ladite prestation est constituée par la location d'un véhicule et en ce que lesdits moyens pour fournir la prestation comprennent une barrière (16) située dans une place de stationnement allouée au véhicule spécifique désigné et/ou des moyens (14) pour autoriser l'ouverture d'une porte de ce véhicule et/ou des moyens pour autoriser la mise en marche du moteur de ce véhicule.

## Claims

1. A system for reserving and supplying a goods item or service comprising:
   - cards (1), into which data may be written, assigned to customers for the said goods or service,
   - a reservation device (2) having a card reader (3) designed to receive the card of a customer during a reservation operation and means (7) for communicating with the customer, the reservation device (2) recording data relating to the reservation of a goods item or service made by the customer to whom the card is assigned,
   - terminals (10) connected to the said reservation device (2), the said terminals (10) being adapted to receive the cards of customers,
   - means (14; 140) associated with the said terminals (10) for physically delivering to a customer a goods item or service which has been reserved in response to the recorded data relating to the reservation made by the customer,
   characterized in that means (12) are provided in the said terminals (10) for writing in the card an access key for a specific goods item or service among the goods or services available near the said terminals (10), and in that the said means (14; 140) for physically delivering the goods or service reserved comprise a card reading device (17), not connected to the said terminals (10) and situated in a location where the specific goods item or service is available, and means (16; 18; 140) for supplying the said specific goods or service in response to the reading of the said access key by the said unconnected card reading device (17).

2. A system for reserving and supplying a goods item or service comprising:
   - cards (1), into which data may be written, assigned to customers for the said goods or service,
   - a reservation device (2) having a card reader (3) designed to receive the card of a customer during a reservation operation and means (7) for communicating with the customer, the reservation device (2) recording data relating to the reservation of a goods item or service made by the customer to whom the card is assigned,
   - terminals (10) connected to the said reservation device (2), the said terminals (10) being adapted to receive the cards of customers,
   - means (14; 140) associated with the said terminals (10) for physically delivering to a customer a goods item or service which has been reserved in response to the data relating to the reservation made by the customer, characterized in that means are provided in the said terminals (10) for assigning to a customer a specific goods item or service among the goods or services available near the said terminals and for transmitting (19) to a card reading device (17), connected to the said terminals (10) and situated in a location where the specific goods item or service is available, an access key for a specific goods item or service available near the said device (17), the said access key corresponding to the said card, and in that the said means (14; 140) for physically delivering the goods or service comprise the said card reading device (17) connected to the said terminals (10) and means (16, 18, 140) for supplying the said specific goods item or service in response to the reading by the said card reading device (17) of the said card corresponding to the access key transmitted.

3. A system according to claim 1 or claim 2, characterized in that means (13) are provided near the said terminals (10) for displaying to the customer information relating to the specific goods or service to be supplied whilst the access key for the specific goods or service is written into the card or transmitted to the said device.

4. A system according to claim 3, characterized in that the said means (13) for displaying information comprise means for indicating the location where the said specific goods item or service is available.

5. A system according to any one of claims 1 to 4, characterized in that the said goods or service consists of the hire of a vehicle and in that the said means for supplying the goods or service comprise a barrier (16) situated in a parking place allocated to the specific designated vehicle and/or means (14) for enabling the opening of a door of the said vehicle and/or means for enabling the starting of the engine of the said vehicle.

**Patentansprüche**

1. System zur Reservierung und Erbringung einer Leistung, umfassend
   - Karten (1), in die Abnehmern dieser Leistung zugeordnete Informationen geschrieben werden können,
   - eine Reservierungsvorrichtung (2), aufweisend ein zum Aufnehmen der Karte eines Abnehmers während eines Reservierungsvorganges bestimmtes Kartenlesegerät (3) und Mittel (7) zum Kommunizieren mit diesem Abnehmer, wobei die Reservierungsvorrichtung (2) Informationen bezüglich der durch den Abnehmer, dem die Karte zugeordnet ist, ausgeführten Reservierung registriert,
   - mit der Reservierungsvorrichtung (2) verbundene Terminals (10), wobei die Terminals (10) in der Lage sind, die Abnehmerkarten aufzunehmen,
   - den Terminals (10) zugeordnete Mittel (14, 140), um in Reaktion auf betreffend die durch den Abnehmer ausgeführte Reservierung registrierte Informationen an einen Abnehmer physikalisch eine reservierte Leistung abzugeben,
   - dadurch **gekennzeichnet,** daß die Mittel (12) in den Terminals (10) vorgesehen sind, um in die Karte einen Zugriffsschlüssel für eine spezifische Leistung unter den bei den Terminals (10) verfügbaren Leistungen zu schreiben,
   - die Mittel (14; 140) zum physikalischen Ausgeben der reservierten Leistung ein Kartenlesegerät (17), das von den Terminals (10) getrennt ist und sich an einem Ort befindet, wo die spezifische Leistung verfügbar ist, und Mittel (16; 18; 140;), um die spezifische Leistung in Reaktion auf das Lesen des Zugriffschlüssels durch das getrennte Kartenlesegerät (17) zu erbringen.

2. System zur Reservierung und zur Erbringung einer Leistung, umfassend
   - Karten (1), in die den Abnehmern dieser Leistung zugeordnete Informationen geschrieben werden können,
   - eine Reservierungsvorrichtung (2), die ein zur Aufnahme der Karte eines Abnehmers während eines Reservierungsvorgangs bestimmtes Kartenlesegerät (3) und Mittel (7) zum Kommunizieren mit dem Abnehmer aufweist, wobei die Reservierungsvorrichtung (2) Informationen betreffend eine durch den Abnehmer, dem die Karte zugeordnet ist, ausgeführte Reservierung einer Leistung registriert,
   - mit der Vorrichtung (2) zur Reservierung (2) verbundene Terminals (10), wobei die Terminals (10) in der Lage sind, die Karten von Abnehmern aufzunehmen,
   - den Terminals (10) zugeordnete Mittel (14; 140) zum physikalischen Abgeben einer reservierten Leistung an einen Abnehmer in Reaktion auf bezüglich der durch den Abnehmer ausgeführten Reservierung registrierte Informationen,
   - dadurch **gekennzeichnet,** daß die Mittel in den Terminals (10) vorgesehen sind, um einem Abnehmer eine spezifische Leistung unter den bei den Terminals verfügbaren Leistungen zuzuweisen und um an ein Kartenlesegerät (17), das mit den Terminals (10) verbunden ist und sich an einem Ort befindet, wo die spezifische Leistung verfügbar ist, einen Zugriffsschlüssel für eine bei diesem Gerät verfügbare spezifische Leistung zu übertragen (19), wobei dieser Zugriffsschlüssel der Karte entspricht,
   - die Mittel (14, 140) zum physikalischen Ausgeben der spezifischen Leistung das mit dem Terminal (10) verbundene Kartenlesegerät (17) und Mittel (16, 18, 140) zum Erbringen der spezifischen Leistung in Reaktion auf das Lesen durch das Kartenlesegerät (17) der Karte entsprechend dem übertragenen Zugriffsschlüssel umfassen.

3. System nach Anspruch 1 oder Anspruch 2, dadurch **gekennzeichnet,** daß die Mittel (13) bei den Terminals (10) vorgesehen sind, um einem Abnehmer eine Information betreffend die auszugebende spezifische Leistung anzuzeigen, während der Zugriffsschlüssel für diese spezifische Leistung in die Karte geschrieben oder zu dem Gerät übertragen wird.

4. System nach Anspruch 3, dadurch **gekennzeichnet,** daß die Mittel (13) zum Anzeigen einer Information Mittel zum Anzeigen des Ortes umfassen, wo die spezifische Leistung verfügbar ist.

5. System nach einem beliebigen der Ansprüche 1 bis 4, dadurch **gekennzeichnet,** daß die Leistung in der Vermietung eines Fahrzeuges besteht und daß die Mittel zum Erbringen der Leistung eine Barriere (16), die sich an einem dem spezifischen gekennzeichneten Fahrzeug zugeordneten Parkplatz befindet, und/oder Mittel (14) zum Gestatten des Öffnens einer Tür des Fahrzeuges und/oder Mittel zum Gestatten des Ingangsetzens des Motors des Fahrzeuges umfassen.